# EUROPEAN PATENT SPECIFICATION

(11) **EP 4 520 158 B1**
(45) Date of publication and mention of the grant of the patent: **04.11.2026**
(21) Application number: 24197616.6
(22) Date of filing: 30.08.2024
(51) Int. Cl.: A01D 34/82, G05G 13/00, A01D 34/64, B62D 1/12, G05G 1/04

(54) **LAP BAR ROTATIONAL DAMPER**
ROTATIONSDÄMPFER FÜR ÜBERLAPPSTANGE
AMORTISSEUR ROTATIF À BARRE DE RECOUVREMENT

(30) Priority: 07.09.2023 US 202363581108 P
(43) Date of publication of application: 12.03.2025
(73) Proprietor: Techtronic Cordless GP, Anderson, SC 29621 (US)
(72) Inventor: D'ANGELO, Adam, Anderson, 29621 (US); MITCHELL, Spencer, Anderson, 29621 (US)
(74) Representative: Zimmermann & Partner Patentanwälte mbB

(56) References cited:
- CN-A- 116 530 292
- US-A1- 2021 237 790
- US-A1- 2021 243 946
- US-B1- 11 343 970

## Description

### CROSS-REFERENCE TO RELATED APPLICATIONS

The present application claims priority to U.S. Provisional Patent Application No. 63/581,108 filed on September 7, 2023.

### FIELD

The present disclosure relates generally to lawnmowers, and more particularly to lap bars and associated features used to affect speed and steering control thereof.

### BACKGROUND

Lawnmowers utilize cutting implements, such as rotatable blades, moved at high speeds to cut grass and underlying organic matter. There are several types of lawnmowers including manual push lawnmowers, walk-behind powered lawnmowers, and riding lawnmowers. Riding lawnmowers utilize a power source, such as one or more battery powered motors, to propel drive wheels and move the lawnmower over an underlying ground surface. Control of the speed and direction of travel is adjustable by a rider using a control implement. One type of control implement is a lap bar controller including first and second lap bars accessible to the rider. The first and second lap bars, which can be left and right lap bars, are independently moveable to control the speed and direction of travel. When the rider displaces both lap bars in an equidistant forward direction from a neutral position, the lawnmower moves forward in a straight line. When one of the lap bars is displaced further than the other, the lawnmower turns in an associated direction. The greater the relative displacement between the two laps bars, the tighter the turn.

User feel is important when operating the lap bar controller. If the lap bars are difficult to move, i.e., too tight, the rider may exert significantly more force than required to maneuver the lawnmower. Conversely, if the lap bars are too easy to move, i.e., too loose, the rider may struggle to navigate smoothly across the underlying ground surface. The lap bars may inadvertently move as a result of the lawnmower's orientation or in response to hitting an obstacle, such as a bump, causing the rider to exert unnecessary force to maintain the lap bars in a desired position. Maintaining the right user feel is important to rider experience and comfort. However, use of large, complicated control elements to maintain proper user feel can adversely impact lawnmower maintenance by making it hard to reach certain components for inspection and repair.

Accordingly, an improved lap bar controller is desired in the art. In particular, a lap bar controller which provide comfortable and easy user experience without introducing large components that take up space would be advantageous. US patent publication no. 11,343,970 B1 describes a speed control assembly used to improve control of vehicles using zero turn drive systems. The speed control assembly includes a return to neutral assembly engaged to each pivot arm of a vehicle to provide a return to neutral force directly thereto, and a damper may be incorporated in the speed control assembly to damp this return to neutral bias.

### BRIEF DESCRIPTION

Aspects and advantages of the invention in accordance with the present disclosure will be set forth in part in the following description, or may be obvious from the description, or may be learned through practice of the technology.

In accordance with the invention, a lap bar controller is provided. The lap bar controller includes a framework configured to be coupled to a frame of the lawnmower, the framework defining an opening and comprising a first flange and a second flange, wherein the first and second flanges extend towards one another; a shaft extending through the opening and configured to rotate about a rotational axis defined by a longitudinal axis of the shaft; a control arm coupled to the shaft, the control arm comprising a grip configured to be accessible to a user operating the lawnmower, wherein a user input to the grip causes the control arm to bias the shaft to rotate; and a rotary damper comprising an outer body coupled to the first and second flanges; an inner body disposed at least partially within an opening of the outer body and coupled to the shaft; a volume disposed between the inner body and the outer body; and a viscous fluid disposed in the volume, wherein the viscous fluid applies resistive torque to the inner body, wherein rotation of the shaft causes displacement of the inner body relative to the outer body, and wherein the rotary damper dampens rotation of the shaft relative to the framework.

In accordance with another embodiment, a lawnmower is provided. The lawnmower includes a frame supporting a seat; a mower deck supported by the frame, the mower deck comprising a plurality of cutting implements driven by one or more deck motors; a plurality of wheels supporting the frame and rotatable to move the lawnmower across a ground surface; a wheel motor configured to drive at least one of the plurality of wheels to rotate; a processor in communication with the wheel motor and configured to instruct the wheel motor based on a user input; a first lap bar controller configured to receive the user input, the first lap bar controller comprising: a framework coupled to the frame and defining an opening; a shaft extending through the opening and configured to rotate about a rotational axis defined by a longitudinal axis of the shaft; a control arm coupled to the shaft, the control arm comprising a grip configured to be accessible to a user operating the lawnmower, wherein a user input to the grip causes the control arm to bias the shaft to rotate; a rotary damper coupled to the shaft, wherein rotation of the shaft causes displacement of the rotary damper, and wherein the rotary damper dampens rotation of the shaft relative to the framework; and a sensor coupled to the framework and the shaft, the sensor configured to detect the user input through rotation of the shaft and communicate the detected user input to the processor.

In accordance with another embodiment, a method of installing a rotary damper to a lap bar controller of a lawnmower is provided. The method includes aligning a rotary damper with a shaft coupled to a lap bar of the lap bar controller; translating the rotary damper to interface with the shaft; and coupling the rotary damper to a framework defining a rotational axis about which the shaft rotates.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a perspective view of a lawnmower in accordance with embodiments of the present disclosure;
FIG. 2 is a perspective view of a lap bar controller of a lawnmower in accordance with embodiments of the present disclosure;
FIG. 3 is a side view of a lap bar of the lap bar controller in accordance with embodiments of the present disclosure;
FIG. 4 is a perspective view of a portion of the lap bar in accordance with embodiments of the present disclosure;
FIG. 5 is a perspective view of a portion of the lap bar in accordance with embodiments of the present disclosure;
FIG. 6 is a perspective view of a portion of the lap bar in accordance with embodiments of the present disclosure;
FIG. 7 is a perspective view of a portion of the lap bar in accordance with embodiments of the present disclosure;
FIG. 8 is a perspective view of a portion of the lap bar in accordance with embodiments of the present disclosure;
FIG. 9 is a perspective view of the rotary damper in accordance with embodiments of the present disclosure;
FIG. 10 is a cross-sectional view of the rotary damper in accordance with embodiments of the present disclosure;
FIG. 11 is a top view of the lap bar in accordance with embodiments of the present disclosure; and
FIG. 12 is a flow chart of a method of installing a rotary damper to a lap bar controller of a lawnmower in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

Lawnmowers come in a wide variety of operating configurations, such as walk-behind push lawnmowers, walk-behind powered lawnmowers, and riding lawnmowers. Riding lawnmowers include a user area that a user can occupy when riding the lawnmower. For example, the user area can include a seat configured to support the user. The seat typically includes a seat bottom and (optionally) a seat back. Alternatively, the user area can include a standing platform upon which the user can stand, kneel, or sit when riding the lawnmower.

Riding lawnmowers utilize control implements to control direction of travel and speed. One exemplary control implement is a lap bar controller. The lap bar controller includes a plurality of independently adjustable lap bars that are each operated upon by a user to maneuver the lawnmower while the user is in the user area. For example, the user can impart a forward force on both lap bars to instruct the lawnmower to move forward. Conversely, the user can impart a rearward force on both lap bars to instruct the lawnmower to move rearward. By varying the relative displacements of the lap bars, the lawnmower can be caused to turn.

Sensors in communication with the lap bars detect relative displacement of the lap bars and generate user input control signals which are communicated to a processor or other controller onboard the lawnmower. The processor can process the user input control signals and cause drive motors associated with drive wheels of the lawnmower to move according to the user input control signals. In some instances, processing is performed at the processor. In other instances, the processor is in communication with a mixing controller which receives the user input control signals (either directly from the sensors or downstream of the processor) and mixes the user input control signals to generate motor control signals which are then communicated to the wheel motors to affect relative movement of the wheels.

During travel over rough or bumpy ground surfaces, it is common for the lawnmower to experience vibration and/or shock forces that travel upward from the wheels to the user. For example, riding over roots, rocks, mounds, grooves, ruts, thresholds, and the like can all cause vibration and shock to be transmitted to the user. If holding one or both lap bars upon occurrence of such vibration and/or shock, the user might cause the lap bar to displace (forward or rearward) thereby causing the lawnmower to course correct (steer) in an undesirable manner. Similarly, some vibrations or shocks may be significant enough to cause displacement of the lap bars even without user input. Yet further, undampened lap bars often lead to user fatigue as the user is required to maintain a more positive engagement with the lap bars. To mitigate such undesirable steering inputs and user fatique, the lap bars can be rotationally dampened. Rotational dampening of the lap bars not only mitigates the effect of vibration and shock, but can further provide a smoother user experience when operating the lap bars over their full range of displacement.

In accordance with the invention described herein, the lap bars (or at least one of the lap bars) are dampened by one or more rotary dampers. The rotary dampers can each include a first member and a second member that rotate relative to one another. For example, the first member can include an inner body and the second member can include an outer body. The outer body can be coupled, such as statically coupled, to a framework of the lap bar controller. The inner body can be coupled, such as movably coupled, to the lap bar. A damping portion, such as a viscous fluid, can be disposed between the inner body and the outer body. The viscous fluid can include, for example, a silicone fluid, a hydraulic fluid, a mineral oil, a polyalphaolefin (PAO), an ester such as phosphate ester, a viscoelastic fluid, or the like. The viscous fluid can provide restrictive torque to the lap bar, restricting or limiting movement of the lap bar and thereby damping rotation of the lap bar. In some instances, the inner and outer bodies can be further dampened relative to one another by one or more resistive elements disposed, e.g., within the viscous fluid. For example, one or both of the inner and outer bodies can include a disc, gear, fan, valve, or the like that applies force to the viscous fluid. As the inner body rotates due to user input at the lap bar, the viscous fluid acts against the disc, gear, fan, valve, or the like to apply the damping resistance torque to the inner body. The relative shape, placement, and number of resistive element(s) can be tuned to generate a desired damping effect.

In some instances, the rotary damper may be adjustable between a plurality of settings. The settings can include, for example, a low damping mode and a high damping mode. In the low damping mode, the associated lap bar may be relatively undamped, allowing for easier movement of the lap bar. In the high damping mode, the associated lap bar may be relatively more highly damped, creating a more rigid lap bar experience which requires greater force to displace the lap bar. In some embodiments, adjusting between the settings can be performed by the user while the user is located at the user area (e.g., while the user is sitting on the lawnmower). For example, the lawnmower can include an engageable interface at the user area through which the user can adjust between the settings. The engageable interface can include a physical implement such as a switch, a dial, an actuatable rod, or the like. Alternatively, or in addition, the engageable interface can include a digital implement such as a touch screen, a microphone in communication with a voice-activated programming function, or the like. In other embodiments, adjusting between the settings is performed locally at the rotary damper. For example, the user may be required to remove one or more fairings or covers to access the rotary damper. Where the rotary damper includes resistive element(s), adjusting the settings can include changing a shape or position of the resistive element(s). For example, the resistive element(s) can include an orifice through which the viscous fluid passes during relative rotation between the inner and outer bodies. The orifice can be adjusted between different sizes, e.g., using a valve, to change flow rate of the viscous fluid therethrough. By increasing the orifice size, the rotary damper can move to the low damping mode. Conversely, by decreasing the orifice size, the rotary damper can move to the high damping mode. It should be understood that in addition to the low and high damping modes, one or more intermediary damping modes can also be implemented. For example, the rotary damper can be adjustable between at least three damping modes, such as adjustable between at least four damping modes, such as adjustable between at least five damping modes, such as adjustable between six damping modes, or the like. The damping modes can include discrete settings, such as discrete positions each associated with a different prescribed damping amount. Alternatively, the damping modes can be infinitely adjustable whereby the user can adjust damping to any relative damping amount between a minimum and a maximum damping effect.

Lap bar controllers having rotary dampers as described herein create a smoother riding experience and a more desirable ride quality. Lap bar controllers described herein fit within relatively small (tight) areas where larger parts may not be able to fit. As consumers rapidly continue to demand electric lawnmowers with increasing range and performance, storage areas for additional battery cells is desired. As a result, wasted space created by large or cumbersome equipment is problematic. Lap bar controllers described herein can occupy small volumes of space and tightly fit against hardware of the lawnmower, thus adding additional space for battery cells, other storage or work tool areas, or the like.

Lap bar controllers having rotary dampers as described herein are self-contained and allow for easy attachment and detachment to/from the lawnmower. The lap bar controllers described herein include a framework to which the lap bar and rotary damper are coupled to. The rotary damper does not need to be attached to any other portion of the lawnmower, such as the lawnmower frame. Therefore, the user can quickly and easily remove the lap bar controller from the lawnmower by detaching the framework from the frame of the lawnmower. The rotary damper remains coupled to the framework and does not need to be disconnected or operated on. This can facilitate easier repairs and replacement of the lap bar controllers as the cavities housing the lap bar controllers are often small and can be difficult to easily access without special equipment.

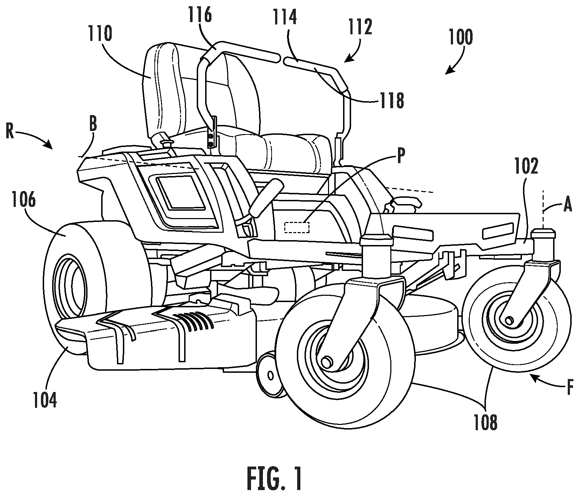

Referring now to the figures, FIG. 1 depicts a lawnmower 100 including a frame 102 supported by a plurality of wheels 104. The wheels 104 can include drive wheels 106 that are rotatably driven to propel the lawnmower 100 and passive wheels 108 that are not rotatably driven. While only one drive wheel 106 is labeled, a second drive wheel 106 is disposed parallel, or generally parallel, with the labeled drive wheel 106. The drive wheels 106, 106 can be disposed at a rear end R of the lawnmower 100. One or more wheel motors (not shown) can provide motivating force to the drive wheels 106, 106 to rotate the drive wheels 106, 106 and propel the lawnmower 100 across a ground surface. The drive wheels 106, 106 can be independently controllable by two independent wheel motors each disposed near a respective drive wheel 106 such that a relative rotational speed of each drive wheel 106 is independently controllable. By varying the speed of each drive wheel 106, the operator can affect steering control of the lawnmower 100. The passive wheels 108 can include for example caster wheels disposed at a forward end F of the frame 102. The caster wheels may each pivot about a rotational axis A extending in a vertical direction. In an embodiment, the passive wheels 108 may be controllable in a steerable manner, i.e., powered to controllably rotate about the rotational axis A.

The lawnmower 100 can include a user area, such as for example, a seat 110. The seat 110 is coupled to the frame 102 and provides an area for a rider to occupy (sit) when operating the lawnmower 100. Alternatively, the user area can include a standing area, such as a platform disposed near the rear end R of the lawnmower 100.

A lap bar controller 112 is disposed adjacent to the seat 110 such that the rider can reach a first lap bar 114 and a second lap bar 116 of the lap bar controller 112 while seated. The first and second lap bars 114 and 116 can be left and right lap bars, respectively. Each of the first and second lap bars 114 and 116 can include a user engageable interface 118, such as a rubberized or otherwise textured grip, through which the rider can interact with the first and second lap bars 114 and 116. To maneuver the lawnmower 100 in a forward direction, the rider displaces both the first and second lap bars 114 and 116 in a forward direction, i.e., towards the forward end F of the lawnmower 100, about a rotational axis B. By displacing one of the first or second lap bars 114 or 116 about the rotational axis B further than the other lap bar 114 or 116, the rider can control a steering direction of the lawnmower 100. For example, in some instances the rider can turn the lawnmower 100 to the left by displacing the second lap bar 116 further towards the forward end F than the first lap bar 114. Conversely, the rider can turn the lawnmower 100 to the right by displacing the first lap bar 114 further towards the forward end F than the second lap bar 116. The rider can further maneuver the lawnmower 100 in a rearward direction, i.e., towards the rear end R of the lawnmower 100, by displacing the first and second lap bars 114 and 116 in a rearward direction. Similar to maneuvering in the forward direction, the rider can maneuver (steer) the lawnmower 100 in the rearward direction by adjusting relative displacements of each of the first and second lap bars 114 and 116.

The lap bars 114, 116 may each pivot about a rotational axis oriented orthogonal with respect to the rotational axis B such that the lap bars 114, 116 can be laterally displaced to allow the user to gain access to the seat 110 or to leave the seat 110, e.g., after finishing a mowing operation. The lap bars 114, 116 may be biased to the in-use orientation depicted in FIG. 1. That is, when no force is applied to the lap bars 114, 116, the lap bars 114, 116 can return to the inward positions to receive steering input from the user. The lap bars 114, 116 can be biased outward by the user to allow the user to pass between the lap bars 114, 116. Alternatively, the lap bars 114, 116 can be biased to the non-use orientation whereby the lap bars 114, 116 are outwardly displaced.

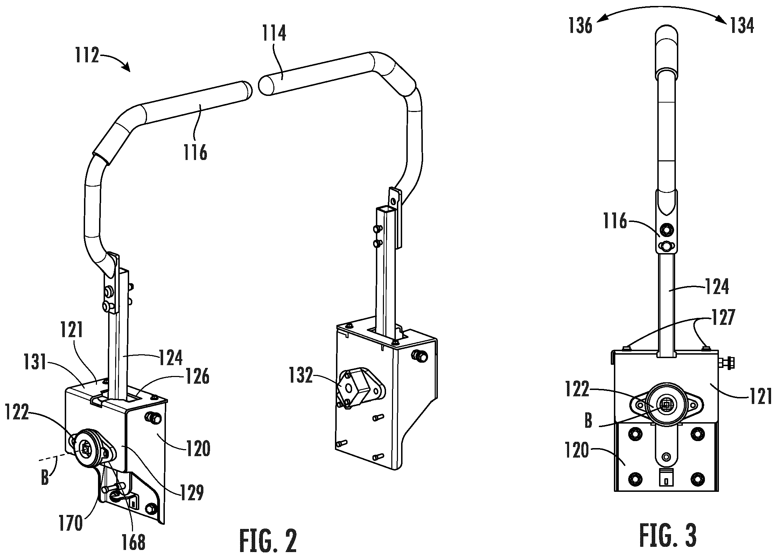

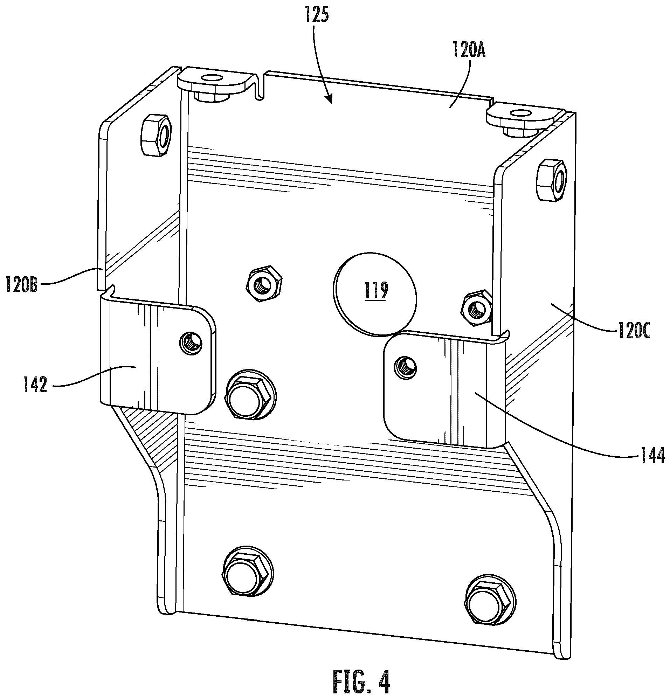

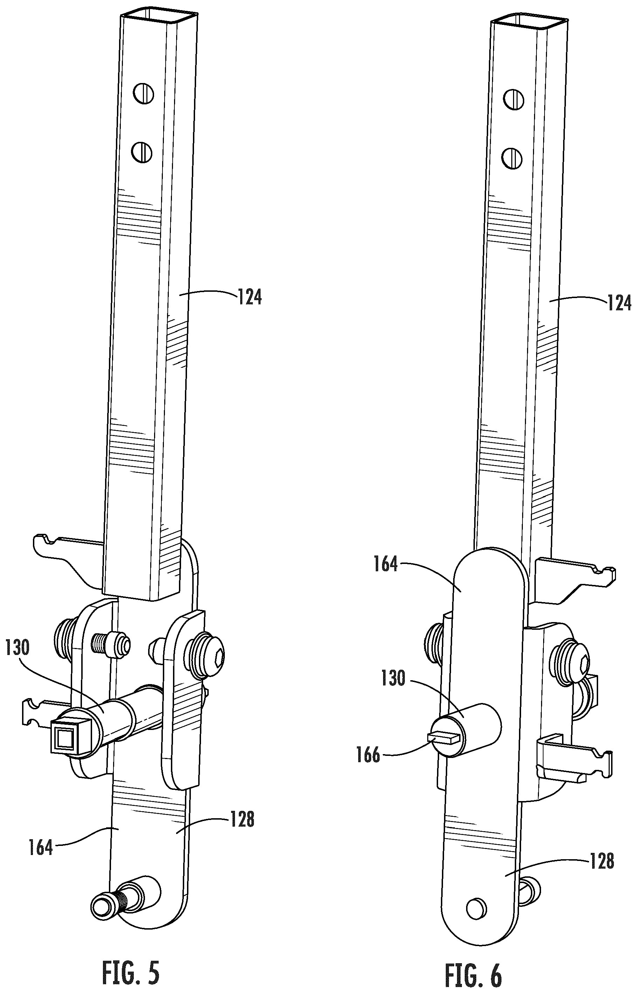

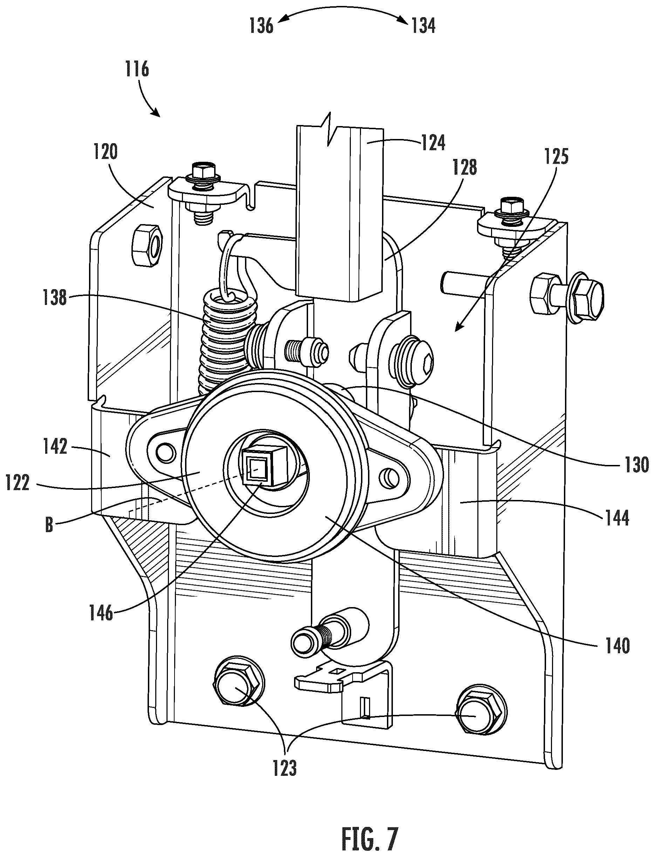

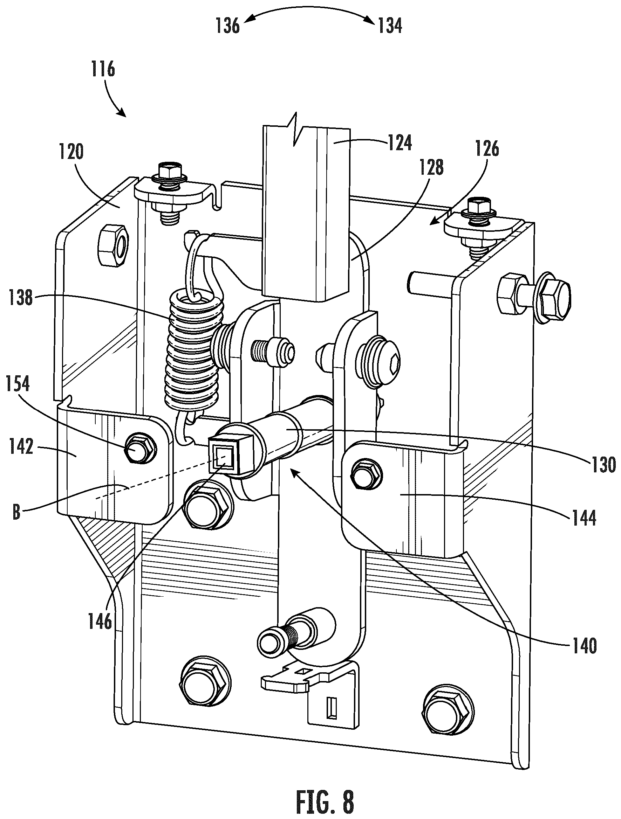

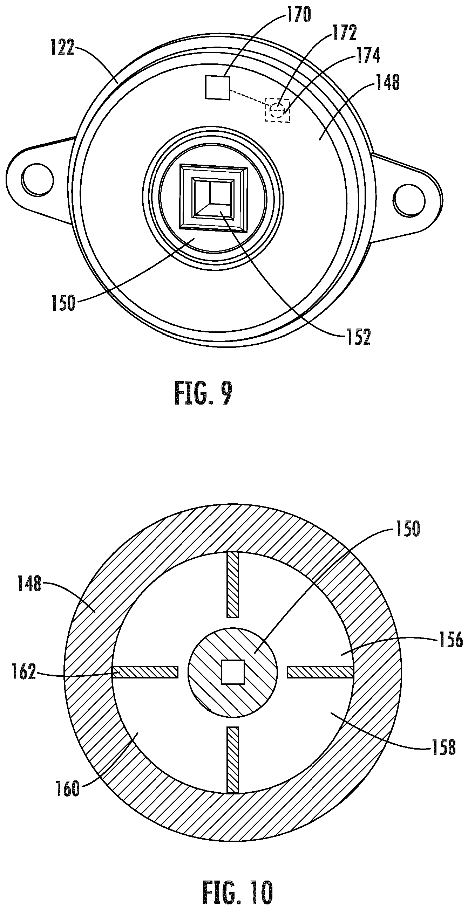

FIG. 2 illustrates the lap bar controller 112 with other portions of the lawnmower 100 removed in order to better understand the lap bar controller 112. In particular, FIG. 2 illustrates a perspective view of the first lap bar 114 and the second lap bar 116 as seen in their relative positions with respect to one another when coupled to the frame 102 (not illustrated in FIG. 2). FIG. 3 illustrates a side view of the second lap bar 116 as seen from a first side of the second lap bar 116. FIG. 4 illustrates a view of a framework 120 of the lap bar controller 112. FIG. 5 illustrates a front view of a portion of the lap bar 114, 116. FIG. 6 illustrates a rear view of the portion of the lap bar 114, 116. It is noted that the first and second lap bars 114, 116 can have the same, or similar, construction as one another. That is, the first and second lap bars 114, 116 can be rotationally symmetrically with one another or generally rotationally symmetrical with one another. Reference to one of the first or second lap bars 114 or 116 should be understood as referring to either of the first or second lap bars 114 or 116 unless described to the contrary. FIG. 7 illustrates a perspective view of the second lap bar 116 as seen from the first side of the second lap bar 116 with a cover 121 (FIG. 3) removed. FIG. 8 illustrates a perspective view of the second lap bar 116 as seen from the first side of the second lap bar 116 with a rotary damper 122 removed. FIG. 9 illustrates the rotary damper 122.

As depicted in FIGS. 2 to 8, the second lap bar 116 includes framework 120. The framework 120 can be formed from a relatively rigid material, such as steel or aluminum. The framework 120 can protect certain components of the lap bar controller 112 against impact and environmental exposure. The framework 120 is configured to be coupled to the frame 102 (FIG. 1) of the lawnmower 100. In an embodiment, the framework 120 is statically coupled to the frame 102 by a plurality of threaded fasteners 123. The framework 120 can be coupled to the frame 102 directly or indirectly, e.g., through one or more intermediary components. In some embodiments, the framework 120 can be part of the frame 102, such as a unitary bracket shaped during a frame forming process.

The framework 120 defines a first wall 120A, a second wall 120B, and a third wall 120C. The first wall 120A can define an opening 119. The second and third walls 120B, 120C extend from opposite ends of the first wall 120A in a generally same direction. In an embodiment, the first, second, and third walls 120A, 120B, 120C are unitary (i.e., formed from a single piece). For example, the second and third walls 120B, 120C can be bent approximately 90° relative to the first wall 120A. A first flange 142 can extend from the second wall 120B and a second flange 144 can extend from the third wall 120C. In an embodiment, the first flange 142 is unitary with the second wall 120B and the second flange 144 is unitary with the third wall 120C. For example, the first and second flanges 142, 144 can each be bent approximately 90° relative to the second and third walls 120B, 120C, respectively. The first and second flanges 142, 144 extend towards one another and each define a mounting location for engaging the rotary damper 122.

A volume 125 is generally defined by the first, second, and third walls 120A, 120B, 120C and the first and second flanges 142, 144. The volume 125 can house one or more components described herein and protect the one or more components from damage and debris during use of the lawnmower 100. As depicted in FIGS. 2 and 3, the volume 125 can be further enclosed by the cover 121. The cover 121 can extend over an open end of the volume 125, further enclosing the volume 125 against debris and damage. The cover 121 can be coupled to the framework 120, e.g., by one or more fasteners 127. Use of the cover 121, allows the user and/or a service technician to gain access to the volume 125 in case one or more components of the lap bar controller 112 require maintenance or replacement.

The cover 121 can include a side surface 129 and a top surface 131 shaped to enclose a portion of the volume 125 by forming a close fit with the framework 120. A cutout 126 can be formed in the cover 121. The cutout 126 can pass through at least the top surface 131 of the cover 121. The cutout 126 can generally define a shape which allows a control arm 124 of the lap bar 114, 116 to pass through the cover 121. The shape of the cutout 126 can further permit movement of the control arm 124 in a steering direction (e.g., forward or backward). For example, the cutout 126 can include an elongated polygon or oval in which the control arm 124 can move by user input. The shape of the cutout 126 can further permit movement of the control arm 124 in the lateral direction (e.g., between the in-use orientation and the non-use orientation). In this regard, the cutout 126 can define a generally T-shaped opening.

The control arm 124 extends from the volume 125 through the cutout 126 to a position whereby an operator can access and control the lap bar 114, 116 coupled to the control arm 124 from the seated position to rotate the control arm 124 about the rotational axis B.

Referring to FIGS. 7 and 8, the control arm 124 can be coupled to a rotatable element 128. The control arm 124 may be unitary with the rotatable element 128 such that the control arm 124 and the rotatable element 128 are one piece with the rotatable element 128 forming a portion of the control arm 124 disposed within the volume 125. Alternatively, the control arm 124 may be attached to the rotatable element 128, e.g., through a welding process, a mechanical fastener, mechanical deformation, or via another attachment method. The rotatable element 128 is rotatable about the rotational axis B.

Referring to FIGS. 5 and 6, the rotatable element 128 includes a body 164 coupled to a shaft 130. The shaft 130 extends from the body 164 in a direction orthogonal therewith. The shaft 130 can extend through the opening 119 (FIG. 4) in the framework 120. The shaft 130 can be rotatably coupled to the opening 119 via a rotatable interface, such as a bearing or bushing to permit rotation of the rotatable element 128 with respect to the framework 120. As illustrated in FIG. 6, the shaft 130 can terminate in a shaped feature 166 which interfaces with a sensor 132. The sensor 132 can include, for example, a rotational sensor, such as a rotational encoder, that receives the shaped feature 166 and keys therewith. As the shaft 130 rotates, the shaped feature 166 rotates by a corresponding amount, which is detected by the sensor 132 to determine rotational displacement of the lap bar 114, 116.

The sensor 132 can detect a rotational position of the control arm 124. For example, the control arm 124 can be rotationally pinned to the shaft 130 and the shaft 130 can interface with the sensor 132 such that the sensor 132 can detect rotational displacement of the shaft 130 in a forward direction 134 and a rearward direction 136 (FIG. 3). In some instances, the sensor 132 can include an absolute encoder that detects an absolute position of the lap bar 114, 116. In other instances, the sensor 132 can include a relative encoder that detects a relative position of the lap bar 114, 116. The relative encoder can be zeroed periodically, such as during initialization/startup procedures, at fixed time intervals (e.g., every 30 minutes of run time), in response to an impact with an obstacle, or the like.

The sensor 132 can communicate signals including data with the rotational position/displacement of the control arm 124 to a processor P (FIG. 1). The signals can be communicated wirelessly from the sensor 132 or through a wired interface. The processor P can receive the signals, interpret the data, and control one or more operational aspects of the lawnmower 100, such as the speed and angular orientation of the lawnmower 100, in response thereto. The signals can be received from the sensors 132 associated with each of the lap bars 114, 116. In some instances, the processor can utilize a mixing algorithm to control the lawnmower 100 in response to receiving the data from the sensor(s) 132. The mixing algorithm outputs control instructions for each of the motors to individually affect speed of the wheels 106, 106 and thereby control movement of the lawnmower 100.

The rotatable element 128 can be rotationally biased by one or more biasing elements, such as one or more springs 138 (FIG. 7). The rotatable element 128 can include an engagement point to which the one or more springs 138 can be coupled. The springs 138 can bias the rotatable element 128 to a neutral position. The neutral position can be associated with a zero speed, zero turn condition wherein the lawnmower 100 is in a non-driven state, i.e., stationary. When the rider releases the lap bar 114, 116, the spring(s) return the lap bar 114, 116 to the neutral position.

The lap bars 114, 116 can each include a separate rotary damper 122. As depicted in FIGS. 4 and 5, the rotary damper 122 can be coupled to the framework 120. For example, the framework 120 can define a mounting location 140 coaxially aligned with respect to the shaft 130 and the rotational axis B. The rotary damper 122 can be disposed at the mounting location 140 and can be coupled with the shaft 130. The rotary damper 122 is coupled with the first flange 142 and the second flange 144. The first and second flanges 142 and 144 can be spaced apart from one another such that the shaft 130 extends therebetween. In some instances, the shaft 130 extends beyond the first and second flanges 142 and 144 in a direction of the rotational axis B such that a distal end 146 of the shaft 130 is disposed outside a boundary of the framework 120. In other instances, the shaft 130 terminates within the outside boundary of the framework 120. The rotary damper 122 can be coupled to the first and second flanges 142 (on the inner or outer sides) such that the rotary damper 122 spans a gap therebetween and interfaces with the distal end 146 of the shaft 130. The rotary damper 122 can be installed on the lawnmower 100, for example, by sliding the rotary damper 122 over the shaft 130 and using one or more fasteners 154 (FIG. 5) to secure the rotary damper to the shaft 130 and the framework 120.

Referring to FIG. 8, the rotary damper 122 can define an outer body 148 and an inner body 150 rotationally coupled to the outer body 148. The outer body 148 can be coupled to the framework 120. The inner body 150 can move (i.e., rotate) relative to the framework 120. In an embodiment, the inner body 150 defines an opening 152 that receives the shaft 130 (see, e.g., FIG. 5). The shaft 130 can be rotationally pinned with respect to the opening 152. In this regard, relative movement of the shaft 130 about the rotational axis B causes the inner body 150 to rotate relative to the outer body 148. As depicted, the opening 152 can define a non-circular shape. The shaft 130 can define a similar shape along at least a portion thereof to rotationally pin the shaft 130 and the inner body 150 together. Alternatively, the shaft 130 and inner body 150 can be coupled together through a separate attachment protocol, such as a bayonet connection, a threaded engagement, an adhesive, a threaded or non-threaded fastener, or the like.

The rotary damper 122 can provide damping resistance against movement of the rotatable element 128 relative to the shaft 130. In an embodiment, the damping resistance is a resistive torque applied in a direction opposite to an input force on the rotatable element 128. In some instances, damping resistance can be linear such that dampening force increases linearly as a result of displacement distance. In other instances, damping resistance can be progressive, with a ramped increase in dampening resistance as a result of displacement. In yet other embodiments, damping resistance can remain the same along the entire, or substantially the entire, displacement distance. These and other damping resistance profiles can create a smooth, controlled resistance which is perceived by the rider while affecting force input on the lap bars 114, 116.

Damping resistance can be created at an interface between the inner and outer bodies 150 and 148. For example, FIG. 10 shows a cross-sectional view of the rotary damper 122 in accordance with an embodiment. Referring to FIG. 10, the rotary damper 122 can create damping resistance through a viscous interface 156 formed between the inner and outer bodies 150 and 148. The outer body 148 can include a volume 158 which houses a viscous fluid 160. As the inner body 150 rotates relative to the outer body 148, the viscous fluid 160 applies resistive torque to the inner body 150, thereby damping rotation of the inner body 150 and thus the lap bar 114, 116 (FIG. 2). In some instances, a resistive element 162 can be disposed within the viscous fluid 160. For example, one or both of the inner and outer bodies 150 and 148 can include a disc, gear, fan, valve or the like that applies force to the viscous fluid 160. As the inner body 150 rotates, the viscous fluid 160 can act against the disc, gear, fan, valve or the like to apply the damping resistance torque to the inner body 150.

The rotary damper 122 may be configured to provide adjustable damping. The user, manufacturer, and/or a service technician can adjust the amount of damping, i.e., resistive torque applied on the lap bar 114, 116 by the rotary damper 122, using a damping controller 170, such as a switch, toggle, dial, touchscreen, button, or the like. The damping controller 170 can be coupled with the resistive element 162 and selectively adjust a state of the resistive element 162. For example, the resistive element 162 can include a valve 172 which affects a size of an orifice 174. As the user increases damping using the damping controller 170, the valve 172 closes, thereby decreasing fluid flow through the orifice 174 and increasing damping resistance. Conversely, as the user decreasing damping using the damping controller 170, the valve 172 opens, thereby increasing fluid flow through the orifice 174 and decreasing damping resistance. In some instances, the valve 172 can be in communication with the processor P (FIG. 1). The processor P can control a state of the valve 172 to affect the damping effect of the rotary damper 122. For example, when the processor P receives information, e.g., from an onboard sensor (not illustrated), that warrants a different damping effect, the processor P can send a control command (through a wired communication channel or through a wireless protocol) to the valve 172 (and more particularly to a motor coupled therewith) to affect a change to the state of the valve 172 and change the damping effect. In some instances, the processor P can include different rider settings, with each rider setting associated with a different user. The user can select their profile (e.g., using a physical or digital selector), causing the processor P to lookup the rider setting and send a control command to the valve 172, e.g., based on a current state of the valve 172 and the saved state associated with the rider setting. Yet other configurations are possible.

In addition to fluid damping, damping resistance can be created through a frictional interface. The frictional interface can be formed between the inner and outer bodies 150 and 148. An amount of kinetic friction generated at the friction interface can be adjustable, e.g., by tightening or loosening the inner and outer bodies 150 and 148 relative to one another.

Referring again to FIG. 2, the rotary damper 122 can be coupled to the framework 120 through an intermediate component 168. The intermediate component can include a rigid or flexible body that positions the rotary damper 122 at a desired location relative to the mounting location 140. In an embodiment, the cover 121 can extend over the rotary damper 122. In another embodiment, the cover 121 may be disposed under the rotary damper 122. In yet another embodiment, the cover 121 can define a cutout 170 in which the rotary damper 122 is disposed.

Unlike with linear dampers, the rotary damper 122 reduces space requirements associated with providing damping forces. Instead of requiring attachment between the linear damper and the frame 102 (as required for linear dampers), rotary dampers 122 like those described herein are self-contained. Self-containment refers to a condition where the damper does not need to be coupled to a surface or attachment interface other than one directly associated with the lap bar controller 112. In such a manner, the lap bar controller 112 can be coupled to the frame 102 and removed from the frame 102 without requiring separate attachment or detachment of the damper with respect to the frame 102. Instead, the lap bar controller 112 is entirely part of, i.e., contained with, the lap bar controller 112. Moreover, less space is occupied by the damper and the damper may be more accessible to a user than a linear damper that is typically disposed below a portion of the mower frame or chassis. Increased access may permit easier removal or maintenance of the damper.

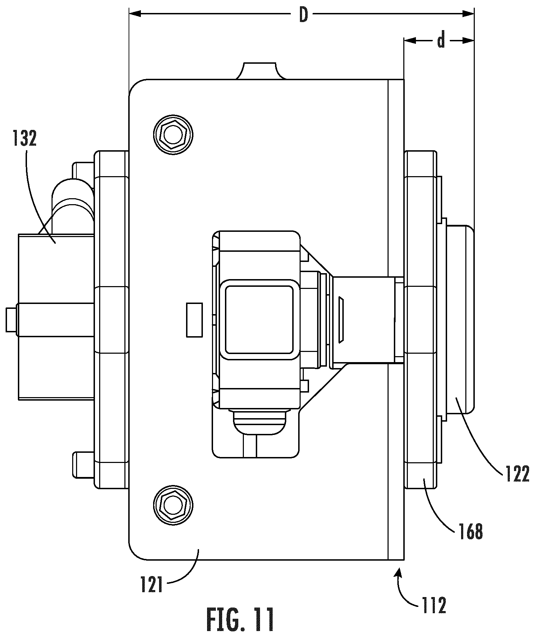

FIG. 11 depicts a top view of a portion of the lap bar controller 112 as seen with the sensor 132 present. In particular, FIG. 11 illustrates the cover 121, the sensor 132, the intermediate component 168, and the rotary damper 122. As depicted, the lap bar controller 112 (minus the sensor 132) defines a maximum lateral dimension D and the rotary damper 122 (and optionally the associated intermediate component 168) accounts for a portion of the maximum lateral dimension D, as represented by dimension d. In an embodiment, d is no greater than 20% D, such as no greater than 15% D, such as no greater than 10% D, such as no greater than 5% D, such as no greater than 2% D. In some instances, d is 0% D. That is, the rotary damper 122 may not extend past the edge of the cover 121. Also, in some instances the dimension d may not include the intermediate component 168. In an embodiment, the rotary damper 122 extends past an outer dimension of the framework 120 by no greater than, i.e., dimension d is no greater than, 75 millimeters (mm), such as no greater than 70 mm, such as no greater than 65 mm, such as no greater than 60 mm, such as no greater than 55 mm, such as no greater than 50 mm, such as no greater than 45 mm, such as no greater than 40 mm, such as no greater than 35 mm, such as no greater than 30 mm, such as no greater than 25 mm, such as no greater than 20 mm, such as no greater than 15 mm, such as no greater than 10 mm, such as no greater than 5 mm. The rotary damper can form a low-profile extension from the lateral surface of the lap bar controller 112.

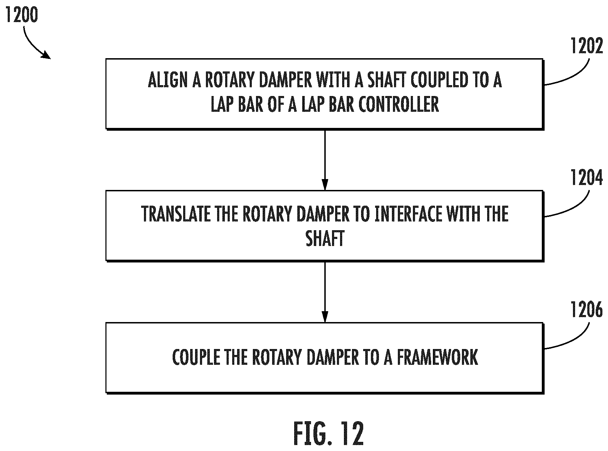

FIG. 12 is a flowchart of a method 1200 of installing a rotary damper to a lap bar controller of a lawnmower in accordance with an embodiment. In general, the method 1200 will be described with reference to a system including the lap bar controller 112 described above with reference to FIGS. 1 to 11. In addition, although FIG. 12 depicts steps performed in a particular order for purposes of illustration and discussion, the method discussed herein is not limited to any particular order or arrangement. One skilled in the art, using the disclosure provided herein, will appreciate that various steps of the method disclosed herein can be omitted, rearranged, combined, and/or adapted in various ways without deviating from the scope of the present disclosure.

The method 1200 includes aligning 1202 a rotary damper with a shaft coupled to a lap bar of a lap bar controller. The lap bar controller is installable (or installed) on a lawnmower. At the time of aligning 1202 the rotary damper with the shaft, the lap bar controller may be removed from the lawnmower, i.e., not attached therewith. For example, aligning 1202 may be performed with the lap bar controller at a workbench or work surface that allows for easier alignment and operability. The user can position the rotary damper adjacent to an end of the shaft of the lap bar controller, such as the distal end 146 of the shaft 130 (FIG. 7). Simultaneously, the user may align the rotary damper with a mounting location associated with framework, such as framework 120, of the lap bar controller.

The method 1200 can further include translating 1204 the rotary damper to interface with the shaft. Translation can be performed until the rotary damper reaches the framework. With the rotary damper adjacent to the framework, the shaft extends through an opening in the rotary damper. The shaft can have a non-circular (i.e., keying) shape that corresponds with a non-circular shape of the rotary damper. Thus, translating the rotary damper to interface with the shaft includes translating the non-circular shape of the shaft into the non-circular shape of the opening in the rotary damper. Once together, the shaft is keyed to the rotary damper.

In some instances, the user may rotate a portion of the rotary damper to align the non-circular shape of the shaft with the non-circular shape of the rotary damper. For example, the rotary damper can include an inner body and an outer body. The inner body can include an opening into which the shaft extends. Due to the non-circular shape of the opening, translating 1204 the rotary damper to interface with the shaft may require rotating the inner body of the rotary damper until the opening aligns with the shaft. One example method for rotating the inner body includes manually adjusting a position of the inner body with respect to the outer body before introducing the rotary damper to the shaft. Another example method for rotating the inner body includes translating the rotary damper onto the shaft and then, with the rotary damper keyed to the shaft, rotating the outer body of the rotary damper to align with mounting features (such as threaded openings) at the mounting location of the framework.

The method 1200 can further include coupling 1206 the rotary damper to the framework. For example, one or more fasteners (e.g., threaded fasteners) can be inserted into one or more mounting holes extending through the rotary damper (such as through the outer body) and secured to the mounting features in the framework. The fasteners can be tightened until the outer body of the rotary damper is fixed to the framework.

The framework can define a rotational axis about which the shaft rotates. Thus, rotation of the shaft requires the inner body of the rotary damper to move relative to the outer body. As described above, the rotary damper provides resistive torque to provide an enhanced rider experience.

After the rotary damper is installed to the framework, or another portion of the lap bar controller, the lap bar controller can be installed at the lawnmower. By way of non-limiting example, the sensor can include a wiring harness terminating in a connector. The wiring harness can be connected to a complementary connector or plug to electrically connect the sensor to a processor of the lawnmower. The lap bar controller can then be installed into a cavity of the lawnmower. In a particular embodiment, the lap bar controller is vertically lowered into the cavity until the framework reaches a prescribed mounting location relative to the frame of the lawnmower where the framework is coupled to the frame. In some instances, the lap bars may not yet be coupled to the lap bar controller during installation of the framework in the cavity. In such instances, the lap bars can be coupled to the lap bar controller.

This process can be repeated for a second lap bar controller, e.g., located on an opposite side of the user area to form a dual user input control implement.

In the event the lap bar controller requires service or removal from the lawnmower, the framework of the lap bar controller is detached from the frame and the lap bar controller is removed from the cavity. The wiring harness is uncoupled from the complementary connector or plug and the lap bar controller is free to be fully removed from the lawnmower. This operation does not require any detachment of the rotary damper from the frame or another structure of the lawnmower. As such, servicing the lap bar controller is easy and can be performed with minimal tooling and instruction.

Lap bar controllers described herein provide smooth operator feel at control implements, allow for rapid installation and removal of the lap bar controller for servicing and repair, reduce spatial requirements and cavity sizing, allow for custom tuning and resistive torque application, and generally provide a better quality experience when using the lawnmower.

## Claims

1. A lap bar controller (112) for a lawnmower (100), the lap bar controller (112) comprising:
a framework (120) configured to be coupled to a frame (102) of the lawnmower (100), the framework (120) defining an opening (119) and comprising:
a first flange (142); and
a second flange (144), wherein the first and second flanges (142, 144) extend towards one another;
a shaft (130) extending through the opening (119) and configured to rotate about a rotational axis (B) defined by a longitudinal axis of the shaft (130);
a control arm (124) coupled to the shaft (130), the control arm (124) comprising a grip configured to be accessible to a user operating the lawnmower (100), wherein a user input to the grip causes the control arm (124) to bias the shaft (130) to rotate; and
a rotary damper (122) comprising:
an outer body (148) coupled to the first and second flanges (142, 144);
an inner body (150) disposed at least partially within an opening of the outer body (148) and coupled to the shaft (130);
a volume (158) disposed between the inner body (150) and the outer body (148); and
a viscous fluid (160) disposed in the volume (158), wherein the viscous fluid (160) applies resistive torque to the inner body (148),
wherein rotation of the shaft (130) causes displacement of the inner body (150) relative to the outer body (148), and wherein the rotary damper (122) dampens rotation of the shaft (130) relative to the framework (120).

2. The lap bar controller (112) of claim 1, wherein the shaft (130) defines a segment having a non-circular cross section, wherein the inner body (150) of the rotary damper (122) is coupled to the shaft (130) at the segment, and wherein the outer body (148) of the rotary damper (122) is coupled to the framework (120).

3. The lap bar controller (112) of claim 1, wherein the rotary damper (122) spans a gap between the first and second flanges (142, 144) and interfaces with a distal end (146) of the shaft (130).

4. The lap bar controller (112) of claim 1, wherein the control arm (124) is further coupled to the framework (120) through a spring (138) configured to bias the control arm (124) to a neutral position.

5. The lap bar controller (112) of claim 1, further comprising a damping controller (170) coupled to the rotary damper (122) and configured to adjust the resistive torque applied by the rotary damper .

6. The lap bar controller (112) of claim 1, further comprising a sensor (132) statically coupled to the framework (120), wherein the sensor (132) receives the shaft (130) and detects rotational displacement of the shaft (130) relative to the framework (120), wherein the sensor (130) is configured to communicate the detected displacement to a processor (P) of the lawnmower (100), wherein the sensor (132) is disposed on a first side of the control arm (124), and wherein the rotary damper (122) is disposed on a second side of the control arm (124), the second side being opposite the first side.

7. The lap bar controller (112) of claim 1, wherein the rotary damper (122) extends beyond an outer boundary defined by the framework (120) by no more than 25 millimeters (mm).

8. The lap bar controller (112) of claim 1, wherein the first and second flanges (142, 144) each define a mounting location for engaging the rotary damper (122).

9. A lawnmower (100) comprising:
a frame (102) supporting a seat (110);
a mower deck supported by the frame (102), the mower deck comprising a plurality of cutting implements driven by one or more deck motors;
a plurality of wheels (104, 106, 108) supporting the frame (102) and rotatable to move the lawnmower (100) across a ground surface;
a wheel motor configured to drive at least one of the plurality of wheels (104, 106, 108) to rotate;
a processor (P) in communication with the wheel motor and configured to instruct the wheel motor based on a user input;
a first lap bar controller (114) configured to receive the user input, the first lap bar controller (114) comprising the lap bar controller (112) of claim 1.

10. The lawnmower (100) of claim 9, further comprising a second lap bar controller (116), the second lap bar controller (116) comprising:
a framework (120) coupled to the frame (102) and defining an opening (119);
a shaft (130) extending through the opening (119) and configured to rotate about a rotational axis (B) defined by a longitudinal axis of the shaft (130);
a control arm (124) coupled to the shaft (130), the control arm (124) comprising a grip configured to be accessible to a user operating the lawnmower (100), wherein a user input to the grip causes the control arm (124) to bias the shaft (130) to rotate;
a rotary damper (122) coupled to the shaft (130), wherein rotation of the shaft (130) causes displacement of the rotary damper (122), and wherein the rotary damper (122) dampens rotation of the shaft (130) relative to the framework (120); and
a sensor (132) coupled to the framework (120) and the shaft (130), the sensor (132) configured to detect the user input through rotation of the shaft (130) and communicate the detected user input to the processor (P).

11. The lawnmower (100) of claim 10, wherein the first and second lap bar controllers (114, 116) each define an inner side and an outer side, wherein the inner side is disposed between the outer side and the seat (110), wherein the rotary damper (122) of the first lap bar controller (114) is disposed at the outer side of the first lap bar controller (114), and wherein the rotary damper (122) of the second lap bar controller (116) is disposed at the outer side of the second lap bar controller (116).

12. The lawnmower (100) of claim 9, wherein the framework (120) defines a width as measured in a lateral direction, and wherein the rotary damper (122) extends from the framework (120) by a distance less than 10% of the width of the framework (120) in the lateral direction.

13. The lawnmower (100) of claim 9, wherein the shaft (130) defines a segment having a non-circular cross section, wherein the inner body (150) is coupled to the shaft (130) at the segment, and wherein the outer body (148) is coupled to the framework (120).

14. The lawnmower (100) of claim 9, wherein the framework (120) defines a mounting location (140) for the rotary damper (122), the mounting location (140) comprising a first flange (142) and a second flange (144) extending towards the mounting location (140), and wherein the rotary damper (122) is coupled to the first and second flanges (142, 144).

15. The lawnmower (100) of claim 9, wherein the first lap bar controller (114) is removable from the lawnmower (100) without disconnecting the rotary damper (122) from the frame (102).

## Patentansprüche

1. Überlappstangensteuerung (112) für einen Rasenmäher (100) wobei die Überlappstangensteuerung (112) Folgendes umfasst:
ein Rahmenwerk (120), das dazu ausgelegt ist, an einen Rahmen (102) des Rasenmähers (100) gekoppelt zu sein,
wobei das Rahmenwerk (120) eine Öffnung (119) definiert und Folgendes umfasst:
einen ersten Flansch (142); und
einen zweiten Flansch (144), wobei sich der erste und der zweite Flansch (142, 144) zueinander erstrecken;
eine Welle (130), die sich durch die Öffnung (119) erstreckt und dazu ausgelegt ist, um eine Rotationsachse (B) zu rotieren, die durch eine Längsachse der Welle (130) definiert ist;
einen Steuerarm (124), der an die Welle (130) gekoppelt ist, wobei der Steuerarm (124) einen Griff umfasst, der dazu ausgelegt ist, für einen Benutzer, der den Rasenmäher (100) bedient, zugänglich zu sein, wobei eine Benutzereingabe an den Griff den Steuerarm (124) veranlasst, die Welle (130) zum Rotieren vorzuspannen; und
einen Rotationsdämpfer (122), der Folgendes umfasst:
einen äußeren Körper (148), der an den ersten und den zweiten Flansch (142, 144) gekoppelt ist;
einen inneren Körper (150), der mindestens teilweise in einer Öffnung des äußeren Körpers (148) angeordnet und an die Welle (130) gekoppelt ist;
ein Volumen (158), das zwischen dem inneren Körper (150) und dem äußeren Körper (148) angeordnet ist; und
ein viskoses Fluid (160), das im Volumen (158) angeordnet ist, wobei das viskose Fluid (160) ein Widerstandsmoment auf den inneren Körper (148) ausübt,
wobei eine Rotation der Welle (130) einen Versatz des inneren Körpers (150) relativ zum äußeren Körper (148) veranlasst, und wobei der Rotationsdämpfer (122) eine Rotation der Welle (130) relativ zum Rahmenwerk (120) dämpft.

2. Überlappstangensteuerung (112) nach Anspruch 1, wobei die Welle (130) ein Segment mit einem nicht kreisförmigen Querschnitt definiert, wobei der innere Körper (150) des Rotationsdämpfers (122) am Segment an die Welle (130) gekoppelt ist, und wobei der äußere Körper (148) des Rotationsdämpfers (122) an das Rahmenwerk (120) gekoppelt ist.

3. Überlappstangensteuerung (112) nach Anspruch 1, wobei der Rotationsdämpfer (122) einen Spalt zwischen dem ersten und dem zweiten Flansch (142, 144) überspannt und mit einem distalen Ende (146) der Welle (130) eine Schnittstelle bildet.

4. Überlappstangensteuerung (112) nach Anspruch 1, wobei der Steuerarm (124) ferner über eine Feder (138), die dazu ausgelegt ist, den Steuerarm (124) in eine neutrale Position vorzuspannen, an das Rahmenwerk (120) gekoppelt ist.

5. Überlappstangensteuerung (112) nach Anspruch 1, die ferner eine Dämpfungssteuerung (170) umfasst, die an den Rotationsdämpfer (122) gekoppelt und dazu ausgelegt ist, das vom Rotationsdämpfer ausgeübte Widerstandsmoment anzupassen.

6. Überlappstangensteuerung (112) nach Anspruch 1, die ferner einen Sensor (132) umfasst, der statisch an das Rahmenwerk (120) gekoppelt ist, wobei der Sensor (132) die Welle (130) aufnimmt und einen Rotationsversatz der Welle (130) relativ zum Rahmenwerk (120) detektiert, wobei der Sensor (130) dazu ausgelegt ist, den detektierten Versatz zu einem Prozessor (P) des Rasenmähers (100) zu kommunizieren, wobei der Sensor (132) auf einer ersten Seite des Steuerarms (124) angeordnet ist, und wobei der Rotationsdämpfer (122) auf einer zweiten Seite des Steuerarms (124) angeordnet ist, wobei die zweite Seite der ersten Seite gegenüberliegt.

7. Überlappstangensteuerung (112) nach Anspruch 1, wobei sich der Rotationsdämpfer (122) über eine äußere Grenze hinaus, die vom Rahmenwerk (120) definiert wird, um nicht mehr als 25 Millimeter (mm) erstreckt.

8. Überlappstangensteuerung (112) nach Anspruch 1, wobei der erste und der zweite Flansch (142, 144) jeweils eine Montagestelle zum Eingreifen des Rotationsdämpfers (122) definieren.

9. Rasenmäher (100), der Folgendes umfasst:
einen Rahmen (102), der einen Sitz (110) stützt;
ein Mähdeck, das vom Rahmen (102) gestützt wird, wobei das Mähdeck eine Vielzahl von Schneidegeräten umfasst, die von einem oder mehreren Deckmotoren angetrieben werden;
eine Vielzahl von Rädern (104, 106, 108), die den Rahmen (102) stützen und rotierbar sind, um den Rasenmäher (100) über eine Bodenfläche zu bewegen;
einen Radmotor, der dazu ausgelegt ist, mindestens eines der Vielzahl von Rädern (104, 106, 108) zum Rotieren anzutreiben;
einen Prozessor (P), der mit dem Radmotor kommuniziert und dazu ausgelegt ist, den Radmotor auf Basis einer Benutzereingabe anzuweisen;
eine erste Überlappstangensteuerung (114), die dazu ausgelegt ist, die Benutzereingabe zu empfangen, wobei die erste Überlappstangensteuerung (114) die Überlappstangensteuerung (112) nach Anspruch 1 umfasst.

10. Rasenmäher (100) nach Anspruch 9, der ferner eine zweite Überlappstangensteuerung (116) umfasst, wobei die zweite Überlappstangensteuerung (116) Folgendes umfasst:
ein Rahmenwerk (120), das an den Rahmen (102) gekoppelt ist und eine Öffnung (119) definiert;
eine Welle (130), die sich durch die Öffnung (119) erstreckt und dazu ausgelegt ist, um eine Rotationsachse (B) zu rotieren, die durch eine Längsachse der Welle (130) definiert ist;
einen Steuerarm (124), der an die Welle (130) gekoppelt ist, wobei der Steuerarm (124) einen Griff umfasst, der dazu ausgelegt ist, für einen Benutzer, der den Rasenmäher (100) bedient, zugänglich zu sein, wobei eine Benutzereingabe an den Griff den Steuerarm (124) veranlasst, die Welle (130) zum Rotieren vorzuspannen;
einen Rotationsdämpfer (122), der an die Welle (130) gekoppelt ist, wobei eine Rotation der Welle (130) einen Versatz des Rotationsdämpfers (122) veranlasst, und wobei der Rotationsdämpfer (122) eine Rotation der Welle (130) relativ zum Rahmenwerk (120) dämpft; und
einen Sensor (132), der an das Rahmenwerk (120) und die Welle (130) gekoppelt ist, wobei der Sensor (132) dazu ausgelegt ist, die Benutzereingabe durch eine Rotation der Welle (130) zu detektieren und die detektierte Benutzereingabe zum Prozessor (P) zu kommunizieren.

11. Rasenmäher (100) nach Anspruch 10, wobei die erste und die zweite Überlappstangensteuerung (114, 116) jeweils eine Innenseite und eine Außenseite definieren, wobei die Innenseite zwischen der Außenseite und dem Sitz (110) angeordnet ist, wobei der Rotationsdämpfer (122) der ersten Überlappstangensteuerung (114) auf der Außenseite der ersten Überlappstangensteuerung (114) angeordnet ist, und wobei der Rotationsdämpfer (122) der zweiten Überlappstangensteuerung (116) auf der Außenseite der zweiten Überlappstangensteuerung (116) angeordnet ist.

12. Rasenmäher (100) nach Anspruch 9, wobei das Rahmenwerk (120) eine in einer Seitenrichtung gemessene Breite definiert, und wobei sich der Rotationsdämpfer (122) vom Rahmenwerk (120) um einen Abstand von weniger als 10% der Breite des Rahmenwerks (120) in der Seitenrichtung erstreckt.

13. Rasenmäher (100) nach Anspruch 9, wobei die Welle (130) ein Segment mit einem nicht kreisförmigen Querschnitt definiert, wobei der innere Körper (150) am Segment an die Welle (130) gekoppelt ist, und wobei der äußere Körper (148) an das Rahmenwerk (120) gekoppelt ist.

14. Rasenmäher (100) nach Anspruch 9, wobei das Rahmenwerk (120) eine Montagestelle (140) für den Rotationsdämpfer (122) definiert, wobei die Montagestelle (140) einen ersten Flansch (142) und einen zweiten Flansch (144) umfasst, die sich zur Montagestelle (140) erstrecken, und wobei der Rotationsdämpfer (122) an den ersten und den zweiten Flansch (142, 144) gekoppelt ist.

15. Rasenmäher (100) nach Anspruch 9, wobei die erste Überlappstangensteuerung (114) vom Rasenmäher (100) entfernbar ist, ohne den Rotationsdämpfer (122) vom Rahmen (102) zu trennen.

## Revendications

1. Dispositif de commande de barre de sécurité (112) pour une tondeuse à gazon (100), le dispositif de commande de barre de sécurité (112) comprenant :
un cadre (120) configuré pour être couplé à un châssis (102) de la tondeuse à gazon (100), le cadre (120) définissant une ouverture (119) et comprenant :
une première bride (142) ; et
une deuxième bride (144), dans lequel les première et deuxième brides (142, 144) s'étendent l'une vers l'autre ;
un arbre (130) s'étendant à travers l'ouverture (119) et configuré pour tourner autour d'un axe de rotation (B) défini par un axe longitudinal de l'arbre (130) ;
un bras de commande (124) couplé à l'arbre (130), le bras de commande (124) comprenant une prise configurée pour être accessible à un utilisateur actionnant la tondeuse à gazon (100), dans lequel une entrée utilisateur sur la prise amène le bras de commande (124) à solliciter l'arbre (130) pour qu'il tourne ; et
un amortisseur rotatif (122) comprenant :
un corps extérieur (148) couplé aux première et deuxième brides (142, 144) ;
un corps intérieur (150) disposé au moins partiellement à l'intérieur d'une ouverture du corps extérieur (148) et couplé à l'arbre (130) ;
un volume (158) disposé entre le corps intérieur (150) et le corps extérieur (148) ; et
un fluide visqueux (160) prévu dans le volume (158), dans lequel le fluide visqueux (160) applique un couple de résistance sur le corps intérieur (148),
dans lequel la rotation de l'arbre (130) provoque un déplacement du corps intérieur (150) par rapport au corps extérieur (148), et dans lequel l'amortisseur rotatif (122) amortit la rotation de l'arbre (130) par rapport au cadre (120).

2. Dispositif de commande de barre de sécurité (112) selon la revendication 1, dans lequel l'arbre (130) définit un segment ayant une section transversale non circulaire, dans lequel le corps intérieur (150) de l'amortisseur rotatif (122) est couplé à l'arbre (130) au niveau du segment, et dans lequel le corps extérieur (148) de l'amortisseur rotatif (122) est couplé au cadre (120).

3. Dispositif de commande de barre de sécurité (112) selon la revendication 1, dans lequel l'amortisseur rotatif (122) enjambe un espacement entre les première et deuxième brides (142, 144) et s'interface avec une extrémité distale (146) de l'arbre (130).

4. Dispositif de commande de barre de sécurité (112) selon la revendication 1, dans lequel le bras de commande (124) est en outre couplé au cadre (120) par un ressort (138) configuré pour solliciter le bras de commande (124) vers une position neutre.

5. Dispositif de commande de barre de sécurité (112) selon la revendication 1, comprenant en outre un dispositif de commande d'amortissement (170) couplé à l'amortisseur rotatif (122) et configuré pour ajuster le couple de résistance appliqué par l'amortisseur rotatif.

6. Dispositif de commande de barre de sécurité (112) selon la revendication 1, comprenant en outre un capteur (132) couplé de manière statique au cadre (120), dans lequel le capteur (132) reçoit l'arbre (130) et détecte le déplacement en rotation de l'arbre (130) par rapport au cadre (120), dans lequel le capteur (130) est configuré pour indiquer le déplacement détecté à un processeur (P) de la tondeuse à gazon (100), dans lequel le capteur (132) est disposé sur un premier côté du bras de commande (124), et dans lequel l'amortisseur rotatif (122) est disposé sur un deuxième côté du bras de commande (124), le deuxième côté étant opposé au premier côté.

7. Dispositif de commande de barre de sécurité (112) selon la revendication 1, dans lequel l'amortisseur rotatif (122) s'étend au-delà d'une limite extérieure définie par le cadre (120) de 25 millimètres (mm) au maximum.

8. Dispositif de commande de barre de sécurité (112) selon la revendication 1, dans lequel les première et deuxième brides (142, 144) définissent chacune un emplacement de montage pour venir en prise avec l'amortisseur rotatif (122).

9. Tondeuse à gazon (100) comprenant :
un châssis (102) supportant un siège (110) ;
un plateau de tondeuse supporté par le châssis (102), le plateau de tondeuse comprenant une pluralité d'outils de tondeuse entraînés par un ou plusieurs moteurs de plateau ;
une pluralité de roues (104, 106, 108) supportant le châssis (102) et pouvant tourner pour déplacer la tondeuse à gazon (100) sur une surface au sol ;
un moteur de roue configuré pour entraîner au moins une de la pluralité de roues (104, 106, 108) pour qu'elle tourne ;
un processeur (P) en communication avec le moteur de roue et configuré pour donner des instructions au moteur de roue sur la base d'une entrée utilisateur ;
un premier dispositif de commande de barre de sécurité (114) configuré pour recevoir l'entrée utilisateur, le premier dispositif de commande de barre de sécurité (114) comprenant le dispositif de commande de barre de sécurité (112) selon la revendication 1.

10. Tondeuse à gazon (100) selon la revendication 9, comprenant en outre un deuxième dispositif de commande de barre de sécurité (116), le deuxième dispositif de commande de barre de sécurité (116) comprenant :
un cadre (120) couplé au châssis (102) et définissant une ouverture (119) ;
un arbre (130) s'étendant à travers l'ouverture (119) et configuré pour tourner autour d'un axe de rotation (B) défini par un axe longitudinal de l'arbre (130) ;
un bras de commande (124) couplé à l'arbre (130), le bras de commande (124) comprenant une prise configurée pour être accessible à un utilisateur actionnant la tondeuse à gazon (100), dans laquelle une entrée utilisateur sur la prise amène le bras de commande (124) à solliciter l'arbre (130) pour qu'il tourne ;
un amortisseur rotatif (122) couplé à l'arbre (130), dans laquelle la rotation de l'arbre (130) provoque un déplacement de l'amortisseur rotatif (122), et dans laquelle l'amortisseur rotatif (122) amortit la rotation de l'arbre (130) par rapport au cadre (120) ; et
un capteur (132) couplé au cadre (120) et à l'arbre (130), le capteur (132) étant configuré pour détecter l'entrée utilisateur par la rotation de l'arbre (130) et communiquer l'entrée utilisateur détectée au processeur (P).

11. Tondeuse à gazon (100) selon la revendication 10, dans laquelle les premier et deuxième dispositifs de commande de barre de sécurité (114, 116) définissent chacun un côté intérieur et un côté extérieur, dans laquelle le côté intérieur est disposé entre le côté extérieur et le siège (110), dans laquelle l'amortisseur rotatif (122) du premier dispositif de commande de barre de sécurité (114) est disposé sur le côté extérieur du premier dispositif de commande de barre de sécurité (114), et dans laquelle l'amortisseur rotatif (122) du deuxième dispositif de commande de barre de sécurité (116) est disposé sur le côté extérieur du deuxième dispositif de commande de barre de sécurité (116).

12. Tondeuse à gazon (100) selon la revendication 9, dans laquelle le cadre (120) définit une largeur mesurée dans une direction latérale, et dans laquelle l'amortisseur rotatif (122) s'étend à partir du cadre (120) sur une distance inférieure à 10 % de la largeur du cadre (120) dans la direction latérale.

13. Tondeuse à gazon (100) selon la revendication 9, dans laquelle l'arbre (130) définit un segment ayant une section transversale non circulaire, dans laquelle le corps intérieur (150) est couplé à l'arbre (130) au niveau du segment, et dans laquelle le corps extérieur (148) est couplé au cadre (120).

14. Tondeuse à gazon (100) selon la revendication 9, dans laquelle le cadre (120) définit un emplacement de montage (140) pour l'amortisseur rotatif (122), l'emplacement de montage (140) comprenant une première bride (142) et une deuxième bride (144) s'étendant vers l'emplacement de montage (140), et dans laquelle l'amortisseur rotatif (122) est couplé aux première et deuxième brides (142, 144).

15. Tondeuse à gazon (100) selon la revendication 9, dans laquelle le premier dispositif de commande de barre de sécurité (114) peut être retiré de la tondeuse à gazon (100) sans déconnecter l'amortisseur rotatif (122) du châssis (102).
